# EUROPÄISCHE PATENTANMELDUNG

(11) **EP 1 083 032 A1**
(43) Veröffentlichungstag der Anmeldung: **14.03.2001**
(21) Anmeldenummer: 00810790.6
(22) Anmeldetag: 04.09.2000
(51) Int. Cl.: B28B 11/16, B25J 15/06, B65G 47/91, B65H 3/08, B28B 13/06

(54) **Saugkopf**

(30) Priorität: 09.09.1999 CH 165599
(71) Anmelder: Tegulas GmbH, 8575 Bürglen (CH)
(72) Erfinder: Imhof, Daniel, 8574 Lengwil-Oberhofen (CH); Galiga, Andreas, 8583 Sulgen (CH)
(74) Vertreter: Hepp, Dieter

(57) **Zusammenfassung**

Zum Entfernen eines Gegenstandes (Z) wie z.B. einem Dachziegel aus einer Form wird ein Saugkopf eingesetzt. Der Saugkopf (1) weist eine Saugplatte (2) auf, die mit einer Oberfläche (3) des Gegenstandes (Z) in Berührung bringbar ist. Zwischen der Saugplatte (2) und der Oberfläche (3) des Gegenstandes (Z) ist ein Unterdruck zum Halten des Gegenstandes (Z) erzeugbar. Weil die Saugplatte (2) auf der der Oberfläche (3) des Gegenstandes (Z) zuwendbaren Seite mit einer Schicht (4) aus luftdurchlässigem Material versehen ist, werden Druckunterschiede über die Oberfläche (3) des Gegenstandes (Z) und damit eine Verformung des Oberfläche (3) weitgehend vermieden.

## Beschreibung

Die Erfindung betrifft einen Saugkopf zum Halten und/oder Bewegen eines Gegenstandes mit den Merkmalen des Oberbegriffs der unabhängigen Patentansprüche.

Zum Halten oder Bewegen von Gegenständen ist es bekannt, Saugköpfe einzusetzen, welche an eine Oberfläche des Gegenstandes anlegbar sind. Durch Erzeugung eines Unterdrucks zwischen der Oberfläche des Gegenstandes und dem Saugkopf wird der Gegenstand am Saugkopf gehalten und kann damit bewegt werden.

Insbesondere werden solche Saugköpfe zum Entformen von Formkörpern aus einer Form eingesetzt. Solche Formkörper können beispielsweise in Formen hergestellte Dachziegel sein.

Es ist bereits bekannt, bei Saugköpfen eine Saugplatte zu verwenden, die mit einer Oberfläche des Formkörpers in Berührung bringbar ist. In die Oberfläche dieser bekannten Saugplatte münden Gasöffnungen. Durch Erzeugen eines Unterdrucks in diesen Öffnungen wird der Formkörper an die Saugplatte angesaugt.

Diese bekannte Saugköpfe sind jedoch mit verschiedenen Nachteilen behaftet.

Die in der Oberfläche der Saugplatte mündenden Gasöffnungen hinterlassen häufig Markierungen auf den Formkörpern, insbesondere wenn es sich um noch verformbare Gegenstände wie beispielsweise Dachziegel handelt. Vor allem beim Einsatz dieser Saugköpfe zum Entfernen von Dachziegeln aus Formen ergeben sich ausserdem weitere Nachteile.

Da der Lehm verhältnismässig stark an der Oberfläche der aus Metall gefertigten Saugplatten haftet, müssen zusätzliche Vorkehrungen zum Entfernen des Ziegels getroffen werden. So ist es bekannt, die Saugfläche mit einem schlecht haftenden Material zu versehen. Um ein einwandfreies Lösen zu gewährleisten, ist die Saugplatte ausserdem mit elektrischen Kontaktstellen versehen. Durch den Stromfluss entsteht eine Wasserdampfschicht, die den Ablöseprozess unterstützt. Dieses Prinzip kommt auch bei den Stahlmessern zum Einsatz, dadurch wird verhindert, dass der Lehm an den Messern kleben bleibt. Dieses System setzt eine Isolationsschicht zwischen Messern und Saugkopfkörper voraus.

Die Form zum Formen von solchen Dachziegeln wird mit einer Gipsschicht ausgegossen. Die Gipsschicht weist eine bestimmte Standzeit auf. Gegen Ende der Standzeit kann sich die Form der Gipsschicht durch Auswaschen verändern. Ein weiterer Nachteil der bekannten Saugköpfe besteht deshalb darin, dass die Form eines auf eine neue Gipsschicht abgestimmten Saugkopfes gegen das Ende der Standzeit der Gipsschicht nicht mehr der Form des Ziegels entspricht. Der Saugkopf kann deshalb unter Umständen Oberflächenabschnitte des Ziegels verformen.

Bekannte Saugköpfe sind ausserdem aufgrund der Konstruktion der Saugplatte aus Metall aufwendig und teuer in der Herstellung.

Es ist deshalb eine Aufgabe der vorliegenden Erfindung, die Nachteile des Bekannten zu vermeiden, insbesondere also einen Saugkopf zum Halten und/oder Bewegen von Gegenständen zu schaffen, welcher ohne Beeinträchtigung der Oberfläche des zu haltenden oder zu bewegenden Gegenstandes einsetzbar ist. Der Gegenstand soll sich ausserdem einfach vom Saugkopf lösen lassen. Eine weitere Aufgabe der Erfindung besteht darin, bei einem Saugkopf zum Entfernen von Ziegeln aus einer Form ein zuverlässiges Halten und Bewegen des Ziegels ohne Oberflächenveränderung des Ziegels auch dann zu gewährleisten, wenn der Gipsausguss in der Form das Ende seiner Standzeit erreicht. Der erfindungsgemässe Saugkopf soll ausserdem einfach und wirtschaftlich herstellbar und vorzugsweise für verschiedene Formkörper einsetzbar sein. Ausserdem sollen hohe Standzeiten erreicht werden und die Wartung der Saugköpfe soll vereinfacht werden.

Erfindungsgemäss wird diese Aufgabe mit einem Saugkopf mit den Merkmalen des kennzeichnenden Teils der unabhängigen Patentansprüche gelöst. Weitere Aufgaben werden mit einem Saugkopf mit den Merkmalen der abhängigen Patentansprüche gelöst.

Der Saugkopf zum Halten und/oder Bewegen eines Gegenstandes kann insbesondere zum Entfernen eines Formkörpers aus einer Form eingesetzt werden. Ein typisches Einsatzgebiet ist das Entfernen von aus Lehm geformten Dachziegeln aus einer Form.

Der Saugkopf weist eine Saugplatte auf, die mit einer Oberfläche des Gegenstandes in Berührung bringbar ist und mit welcher zwischen der Saugplatte und der Oberfläche des Gegenstandes ein Unterdruck erzeugbar ist. Der Unterdruck führt dazu, dass der Gegenstand an die Saugplatte angesaugt und von dieser gehalten wird.

Die Saugplatte gemäss der vorliegenden Erfindung ist auf einer dem Gegenstand zuwendbaren Seite mit einer luftdurchlässigen Schicht versehen.

Die luftdurchlässige Schicht ist besonders vorteilhaft, weil damit im Gegensatz zu bekannten Saugplatten über die ganze beschichtete Oberfläche der Saugplatte ein etwa gleicher Unterdruck erzielt wird. Ein Unterdruck lediglich im Bereich von einigen wenigen Gaskanälen wird damit vermieden.

Mit luftdurchlässig wird in diesem Zusammenhang ein Material bezeichnet, das so luftdurchlässig ist, dass beim Anlegen eines Unterdrucks an einer anderen, als der dem Gegenstand zuwendbaren Seite ein ausreichender Unterdruck zum Halten des Gegenstandes im Bereich der dem Gegenstand zuwendbaren Seite erzeugt wird. Das luftdurchlässige Material weist typischerweise eine Porenstruktur oder eine Vielzahl von Luftkanälen auf.

Besonders vorteilhaft ist es, wenn sich die Schicht über die ganze dem Gegenstand zuwendbare Seite der Saugplatte erstreckt und eine gleichmässige Oberflächenstruktur aufweist.

In einem besonders bevorzugten Ausführungsbeispiel besteht die Schicht aus einem elastisch verformbaren Material. Unter elastisch verformbar wird in diesem Zusammenhang ein Material verstanden, das nach einer Verformung im wesentlichen seine ursprüngliche Gestalt wieder annimmt.

Eine solche verformbare Schicht ist insbesondere bei einem Saugkopf zur Entnahme von Dachziegeln aus einer Form vorteilhaft. Dank der elastisch verformbaren Schicht passt sich die Oberfläche der Saugplatte jederzeit an die Form des Dachziegels, auch wenn sich die Form des Dachziegels aufgrund der Auswaschung der Gipsschicht in der Form verändert.

Besonders bevorzugt weist die Schicht einen mehrlagigen Aufbau auf. An ein Trägermaterial, z.B. ein Gewebe schliesst sich ein Schaumstoff und eine Deckschicht aus einem Gewebe an. Die zentrale Schaumstoffschicht führt zur gewünschten Verformbarkeit. Das Trägermaterial dient zur Verfestigung und Verbesserung der Befestigung des Schaumstoffes auf der Saugplatte. Die Deckschicht schützt den Schaumstoff und hält diesen mechanisch zusammen. Das Trägermaterial ist ausserdem im Zusammenhang mit einer lösbar mit dem Grundkörper verbindbaren Schicht besonders vorteilhaft. Das Trägermaterial bietet einen guten Haftgrund. Wenn der Grundkörper z.B. mit einem Klettelement eines Klettverschlusses versehen ist, kann die Schicht einfach am Grundkörper befestigt und ausgetauscht werden. Besonders vorteilhaft ist aufgrund der geringen Dicke eine Mikroklette, die sich im wesentlichen über den ganzen Grundkörper erstrecken kann. Ein Klettverschluss ist besonders vorteilhaft, weil damit auf eine Klebeverbindung verzichtet werden kann. Klebeverbindungen können zu harten Stellen im Schaumstoff führen, was zu unerwünschten Verformungen des Ziegels führen kann. Ausserdem ist eine Klebverbindung im Randbereich des Grundkörpers problematisch, weil aufgrund der Bewegung des Saugkopfs die Gefahr des Abreissens der Schicht besteht. Bei einer Klettverbindung wird die Schicht automatisch wieder mit dem Grundkörper verbunden, wenn sie auf einen Ziegel gedrückt wird.

Es ist auch denkbar, Klettelemente nur teilweise über die Oberfläche des Grundkörpers anzuordnen. In diesem Fall können die Klettelemente im Grundkörper versenkt werden, so dass sie nicht zu Verformungen des Ziegels führen.

Besonders bevorzugt besteht die mittlere Schicht aus einem elastischen Schaumstoff. Unter elastischem Schaumstoff wird in diesem Zusammenhang ein Schaumstoff verstanden, die bei Druckverformung nach DIN 53580 bis zu 50% seiner Dicke keine bleibende Verformung von mehr als 2% seines Ausgangsvolumens aufweisen. Es hat sich herausgestellt, dass eine Schicht aus Schaumstoff oder eine Deckschicht auch im Hinblick auf das Entfernen des Gegenstandes, beispielsweise des Dachziegels von der Saugplatte vorteilhaft ist. Im Gegensatz zu bekannten Saugplatten mit einer glatten metallischen oder Teflon beschichteten Oberfläche ist die Haftung zwischen der Oberfläche der Deckschicht und der Oberfläche des Gegenstandes reduziert. Aufgrund der Elastizität der mittleren Schicht wird beim Halten des Gegenstandes eine Vorspannung erzeugt. Diese Vorspannung hilft ebenfalls beim Entfernen des Gegenstandes. Aus diesen Gründen kann beispielsweise bei Dachziegeln auf zusätzliche Mittel zum Verbessern der Ablösbarkeit des Dachziegels wie beispielsweise Erzeugen von Dampf mit einem elektrischen Strom verzichtet werden.

Vorteilhaft weist die Saugplatte einen Grundkörper mit einer geschlossenen Oberfläche auf. Der Grundkörper dient als Träger die luftdurchlässige Schicht. Dabei kann die Form des Grundkörpers und/oder die Form der Schicht der Form des Gegenstandes, beispielsweise des Dachziegels angepasst werden. Daraus ergibt sich eine besonders gute Saugwirkung, weil die Saugplatte und den Gegenstand im ganzen Bereich ihrer Kontaktflächen aneinander anliegen. Der Grundkörper kann beispielsweise aus einem Kunststoffmaterial, insbesondere aus einem Kunstharz bestehen. Dies ist im Hinblick auf die Herstellung des Grundkörpers besonders vorteilhaft. Mehrere Grundkörper zum Bewegen von ähnlichen Gegenständen, deren Form der Form der Gegenstände angepasst ist, können im Kunststoffgiessverfahren hergestellt oder gefräst werden.

Es ist aber auch denkbar, einen Grundkörper aus luftdurchlässigem, stabilen Material zu verwenden, der seitlich luftdicht versiegelt ist. Damit können Bohrungen im Grundkörper oder eine Luftführung am Rand des Grundkörpers vermieden werden.

Der Saugkopf zum Entfernen von Dachziegeln aus einer Form kann ausserdem in bekannter Weise mit seitlichen Messern zum Abschneiden von überstehenden Rändern des Dachziegels versehen sein. Besonders vorteilhaft ist es dabei, wenn zwischen den Messern und der Saugplatte ein Spalt gebildet wird, der als Gasverbindung zwischen der luftdurchlässigen Schicht und Mitteln zum Erzeugen eines Unterdrucks wirkt. Der Druck im Bereich der der Oberfläche des Gegenstandes zuwendbaren Seite der Saugplatte wird über den Spalt und durch das Innere der luftdurchlässigen Schicht reduziert. Besonders vorteilhaft ist dabei, dass die die Saugplatte umgebenden Messer den Raum zwischen der Oberfläche der Saugplatte und der Oberfläche des Gegenstandes gegen aussen im wesentlichen luftdicht abschliessen, sobald die Messer in den Dachziegel eingedrückt sind.

In einem weiteren bevorzugten Ausführungsbeispiel ist auf der der Schicht aus luftdurchlässigem Material abgewandten Seite des Grundkörpers eine Verstärkungsplatte angeordnet. Die Verstärkungsplatte dient einerseits zur Stabilisierung des Grundkörpers und erlaubt andererseits eine Verbindung des Grundkörpers mit der Verstärkungsplatte. Besonders bevorzugt ist eine lösbare Verbindung der Saugplatte mit der Verstärkungsplatte. Damit ist es möglich, bei einem bestimmten Saugkopfkörper verschiedene Saugplatten einzusetzen, die für Gegenstände, insbesondere Dachziegeln mit unterschiedlicher Oberflächenform geeignet sind. Der Grundkörper und die Verstärkungsplatte können dabei Mittel zum gegenseitigen Ausrichten aufweisen.

Besonders bevorzugt ist die Saugplatte mit Verbindungsmitteln mit der Verstärkungsplatte verbunden. Die Verbindungsmittel sind dabei vorteilhaft von ausserhalb des Saugkopfs betätigbar. Dazu kann eine Öffnung, z.B. in den seitlichen Messern vorgesehen sein, durch welche ein Werkzeug wie ein Schraubenzieher oder Imbusschlüssel durchführbar ist. Die Öffnung ist dabei verschliessbar ausgebildet, damit im Betrieb ein Vakuum aufrecht erhalten werden kann.

Gemäss einem weiteren Aspekt der Erfindung wird ein Saugkopf zum Halten und/oder Bewegen eines Gegenstandes, insbesondere zum Entfernen eines Formkörpers aus einer Form vorgeschlagen, der eine Saugplatte aufweist, die mit einer Oberfläche des Gegenstandes in Berührung bringbar ist und mit welcher zwischen der Saugplatte und der Oberfläche des Gegenstandes ein Unterdruck zum Halten des Gegenstandes erzeugbar ist. Die Saugplatte ist dabei mit Lufikanälen zum Erzeugen des Unterdrucks versehen, die sich bis auf eine dem Gegenstand zuwendbare Seite erstrecken. Erfindungsgemäss wird dabei der Querschnitt der Luftkanäle in Abhängigkeit der Verformbarkeit der Oberfläche des Gegenstandes so gewählt, dass die Oberfläche des Gegenstandes durch den Unterdruck nicht verformt wird. Im Gegensatz zu bekannten Saugplatten weist also die Saugplatte gemäss diesem Aspekt der Erfindung eine Vielzahl von verhältnismässig kleinen Luftkanälen auf. Die pro Luftkanal auf die Oberfläche des Gegenstandes wirkende Kraft ist damit so reduziert, das keine Verformung der Oberfläche entsteht.

Gemäss einem weiteren Aspekt der Erfindung ist die Saugplatte mit einer Schicht aus einem elastisch verformbaren Material versehen. Die Verformung der Oberfläche des Gegenstandes aufgrund des Unterdruck kann dabei auch bei verhältnismässig wenig und grossen Luftkanälen verhindert werden, da die Ränder der Luftkanäle aufgrund der Verformbarkeit der Schicht nicht scharf definiert sind.

Die Erfindung wird im Folgenden in Ausfürhungsbeispielen und anhand der Zeichnungen näher erläutert. Es zeigen:
- Figuren 1a - 1c: schematische Darstellung von Schritten zur Entnahme eines Gegenstandes aus einer Form,
- Figur 2: Querschnitt durch einen erfindungsgemässen Saugkopf,
- Figur 3: perspektivische Explosionsdarstellung eines erfindungsgemässen Saugkopfes,
- Figur 4a und 4b: alternative Ausführungsbeispiele von Saugplatten und
- Figur 5: schematische Darstellung des Aufbaus der Schicht der Saugplatte.

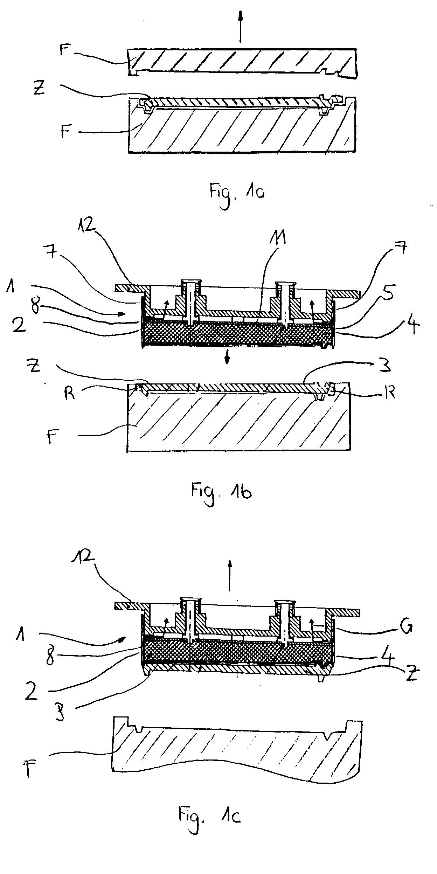

Figuren 1a bis 1c zeigen schematisch, wie ein Gegenstand Z, der in einer Form F geformt wurde mit einem Saugkopf 1 aus der Form F entfernt wird. Hier und im Folgenden wird beispielhaft als Gegenstand ein Dachziegel gezeigt. Selbstverständlich können auch andere Gegenstände mit den erfindungsgemässen Saugköpfen gehalten und bewegt werden. Besonders vorteilhaft sind die erfindungsgemässen Saugköpfe bei Gegenständen, deren Oberfläche verformbar ist. Die Erfindung ist auch bei anderen Verfahren als Gipsverpressung, z.B. Gummiverpressung oder Stahlverpressung vorteilhaft einsetzbar.

Gemäss Figur 1a wird ein Dachziegel Z in einer Form F gepresst. Die Form F besteht aus zwei Formhälften. Nach Beendigung des Formvorgangs wird die obere Formhälfte F entfernt, damit der Ziegel Z aus der unteren Formhälfte F entnommen werden kann. Die Formen F sind dem Fachmann bekannte Werkzeuge zum Formen von Dachziegeln. Sie bestehen typischerweise aus Aluminium. Dabei ist die Oberfläche der Formen in bekannter Weise mit einer Gipsschicht ausgegossen.

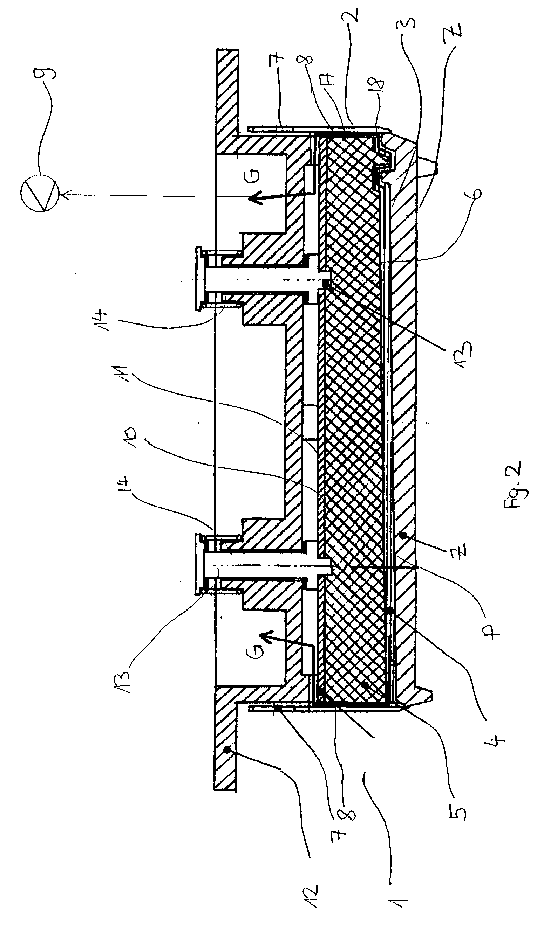

Zum Entnehmen des Dachziegels Z aus der unteren Formhälfte F wird wie in Figur 1b dargestellt ein Saugkopf 1 in Pfeilrichtung auf den Dachziegel Z aufgesetzt. Der Saugkopf 1 besteht im wesentlichen aus einer Saugplatte 2 und einem Saugkopfkörper 12. Die Saugplatte 2 ist wie in Figur 2 im Detail dargestellt lösbar mit einer Verstärkungsplatte 11 und dem Saugkopfkörper 12 verbunden.

Die Saugplatte 2 besteht im wesentlichen aus einem Grundkörper 5, der mit einer Schicht 4 versehen ist. Die Schicht 4 ist luftdurchlässig und weist typischerweise einen mehrlagigen Aufbau mit einer Schicht aus einem Schaumstoff auf. Eine erste Lage 26 besteht aus einem Trägermaterial, z.B. einem Gewebe wie Velours. Eine mittlere Lage 27 besteht aus einem Schaumstoff. Eine dritte Lage 28 bildet eine Deckschicht (siehe auch Figur 5). Der Grundkörper 5 ist Messern 7 umgeben. Zwischen den Messern 7 und der Aussenseite des Grundkörpers 5 wird dabei ein Spalt 8 (siehe auch Figur 2) gebildet.

Zum Entfernen des Dachziegels Z wird der Saugkopf 1 mit der Schicht 4 auf die Oberfläche 3 des Dachziegels Z gelegt. Dabei werden gleichzeitig mit den Messern 7 überstehende Randabschnitte R des Dachziegels Z abgeschnitten.

Sobald die Schicht 4 auf dem Dachziegel Z aufliegt, kann der Dachziegel Z durch Erzeugung eines Unterdrucks im Bereich der Schicht 4 mit der Saugplatte 2 angesaugt und dadurch gehalten werden. Dazu wird im Spalt 8 zwischen dem Grundkörper 5 und der Schicht 4 einerseits und den Messern 7 andererseits ein Unterdruck erzeugt. Dabei wird durch die luftdurchlässige Schicht 4 über deren Seitenränder Luft abgesaugt, sodass sich im Bereich der dem Dachziegel Z zuwendbaren Seite der Schicht 4 ein Unterdruck einstellt. Der Dachziegel Z wird dabei an die Saugplatte 2 insbesondere an die Oberfläche der Schicht 4 angesaugt.

Die in die Oberfläche 3 des Dachziegels Z eingedrückten Messer 7 dichten dabei den zwischen der Oberfläche 3 des Dachziegels Z und der Schicht 4 gebildeten Hohlraum nach aussen ab. Der am Saugkopf 1 angesaugte Dachziegel Z wird anschliessend durch Bewegung des Saugkopfes 1 wie in Figur 1c dargestellt aus der Form F entnommen und an geeigneter Stelle abgelegt. Sobald der Unterdruck nicht mehr aufrecht erhalten wird löst sich der Dachziegel Z von der luftdurchlässigen Oberfläche der Schicht 4. Zur Unterstützung der Ablösung ist es ausserdem denkbar durch die Schicht 4 Luft gegen die Oberfläche 3 des Dachziegels Z zu blasen, also in diesem Bereich einen Überdruck zu erzeugen.

Der in Figur 1c mit einem Pfeil G dargestellte Fluss der Luft wird in diesem Fall umgekehrt.

In Figur 2 ist eine vergrösserte Darstellung des Saugkopfes 1 im Querschnitt gezeigt. Der Saugkopf 1 besteht im wesentlichen aus einem Saugkopfkörper 12 mit einer Verstärkungsplatte 11 und einer lösbar mit der Verstärkungsplatte 11 verbundenen bzw. verbindbaren Saugplatte 2.

Die Saugplatte 2 besteht aus einem Grundkörper 5. Auf der der Oberfläche 3 des Dachziegels Z zuwendbaren Oberfläche 6 des Grundkörpers 5 ist eine Schicht 4 angeordnet. Die Schicht 4 besteht aus einem luftdurchlässigen Material. Typischerweise wird eine Schicht aus Tricomousse, Ets. Maillard, Quievy (FR) eingesetzt.

Die Oberfläche 6 des Grundkörpers 5 weist eine Kontur auf, die der Kontur der Oberfläche 3 des Dachziegels Z entspricht. Die Schicht 4 weist über die gesamte Oberfläche 6 des Grundkörpers 5 eine etwa gleichmässige Dicke von etwa 3 bis 8 mm auf und folgt ebenfalls der Kontur der Oberfläche 3 des Dachziegels Z. Der Grundkörper 5 ist über seine ganze Fläche mit einer Mikroklette versehen, mit der eine Deckschicht der Schicht 4 verbindbar ist.

Auf der der Schicht 4 abgewandten Seite 10 des Grundkörpers 5 ist dieser mit der Verstärkungsplatte 11 verbindbar. Die Verstärkungsplatte 11 dient einerseits zur Stabilisierung des Grundkörpers 5 und weist Mittel zur Verbindung mit dem Grundkörper 5 auf. Die Verstärkungsplatte 11 ist typischerweise aus Stahl gebildet.

Auf der Verstärkungsplatte 11 sind Öffnungen 17 vorgesehen, die mit Bohrungen 14 im Saugkopfkörper 12 fluchten. Mit durch die Öffnungen 17 und Bohrungen 14 durchführbaren Stiften 15 können die Saugplatte 2 und die Verstärkungsplatte 11 ausgerichtet werden.

Der Grundkörper 5 ist im gezeigten Ausführungsbeispiel aus einem Kunstharz, beispielsweise Ebalta PW920 von Ebalte Kunstoff GmbH, Rothenburg (DE) gefertigt.

Der Grundkörper 5 und die Schicht 4 sind ausserdem von seitlichen Messern 7 umgeben. An die Messer 7 kann zum Verbessern der Ablösung des Ziegels in an sich bekannter Weise ein Strom angelegt werden. Weil ein solcher Strom bei der Saugplatte 2 aufgrund der Schicht 4 nicht nötig ist, kann auch auf eine elektrische Isolation der Messer gegenüber der Saugplatte verzichtet werden. Zwischen den Messern 7 und den Aussenseiten 17 des Grundkörpers 5 bzw. 18 der Schicht 4 wird ein Spalt 8 gebildet. Der Spalt 8 steht wie schematisch mit einem Pfeil G dargestellt in Gasverbindung mit einer Vakuumpumpe 9. Damit kann über den Spalt 8, die Aussenseiten 18 der Schicht 4 und das Innere der Schicht 4 mittels der Vakuumpumpe 9 ein Unterdruck im Bereich zwischen der Oberfläche der Schicht 4 und der Oberfläche 3 des Dachziegels Z gebildet werden. Dank der luftdurchlässigen Schicht 4 stellt sich über die gesamte Oberfläche 3 des Dachziegels Z etwa der gleiche Druck P ein. Im Gegensatz zu Saugplatten gemäss dem Stand der Technik werden Druckgradienten vermieden, die zu einer Verformung der Oberfläche 3 des Dachziegels Z führen könnten.

Die Verformbarkeit der Schicht 4 erlaubt ausserdem den Ausgleich von Abweichungen der Oberfläche 3 des Dachziegels Z von einer Sollform. Solche Abweichungen können bei der Herstellung des Dachziegels Z durch Auswaschen des Gipsausgusses in der Form F entstehen.

Während des Haltens des Ziegels kann die Schicht 4 auf eine Dicke von etwa 1 bis 2 mm komprimiert werden. Sobald der Unterdruck aufgehoben wird, hilft die Rückstellkraft des elastischen Materials der Schicht 4 ausserdem, den Dachziegel Z von der Schicht 4 zu lösen.

Der gleiche Saugkopf 1 kann für Dachziegel Z verschiedener Formen verwendet werden. Dabei wird die Saugplatte 2 durch eine andere, der Form des entsprechenden Dachziegels angepasste Saugplatte ersetzt. Der Austausch wird durch die lösbare Verbindung zwischen Saugplatte 2 und Verstärkungsplatte 11 erleichtert. Die lösbare Verbindung ist durch im Hinblick auf Reinigung der Schicht und Auswechseln von weiteren dem Fachmann an sich bekannten Komponenten wie Lochnadeln vorteilhaft.

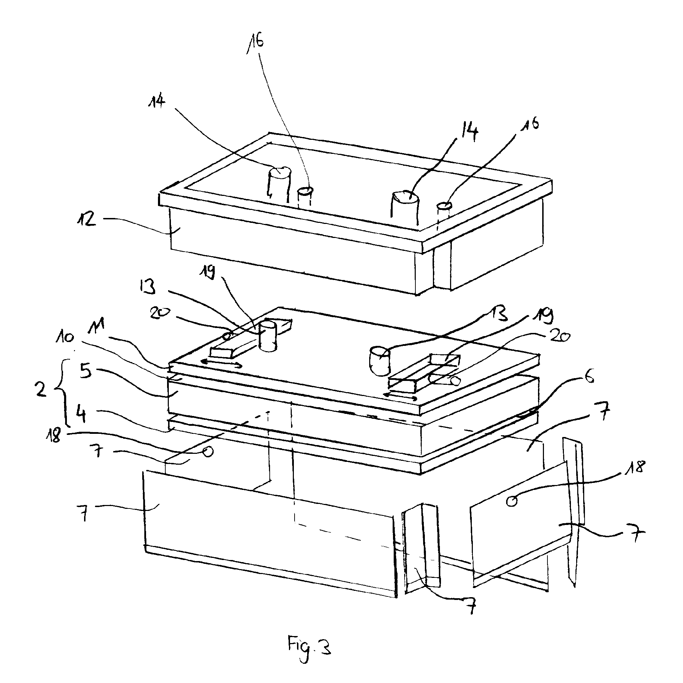

In Figur 3 ist der Saugkopf 1 in einer Explosionsdarstellung perspektivisch gezeigt. Gleiche Referenznummern bezeichnen dabei gleiche Teile wie in Figur 2. Die einzelnen Teile der Saugplatte 2, namentlich der Grundkörper 5, die Schicht 4, die Verstärkungsplatte 11 und die Messer 7 werden dabei von einem nicht im Detail gezeigten Klemmmechanismus zusammengehalten. Sie können aber auch verklebt sein. Neben den Bohrungen 14, die zur Aufnahme der Stifte 13 der Verstärkungsplatte 11 dienen ist der Saugkopfkörper 12 ausserdem mit Gasdurchführöffnungen 16 versehen. Die Gasdurchführöffnungen 16 verbinden die in Figur 2 gezeigte Vakuumpumpe 9 mit dem zwischen den Messern 7 und dem Grundkörper 5 bzw. der Schicht 4 gebildeten Spalt 8.

Die Verbindung wird mit Verbindungsmitteln erzeugt. Die Verbindungsmittel sind beispielsweise als die Verstärkungsplatte 11 dürchdringende Klemmglieder 19 ausgebildet sein, welche kraft- und/oder formschlüssig mit Elementen des Grundkörpers 5 in Eingriff bringar sind (in Figur 1 bis 2 nicht dargestellt). Durch Verschieben der Klemmglieder 19, kann die Verbindung gelöst und wieder erzeugt werden. Die Klemmglieder können z.B. auf einer Gewindespindel 20 gelagert sein, die mit einem Werkzeug drehbar ist. Zum Einführen des Werkzeugs durch die Messer 7 können diese mit einer verschliessbaren Öffnung 18 versehen sein (siehe Figur 3).

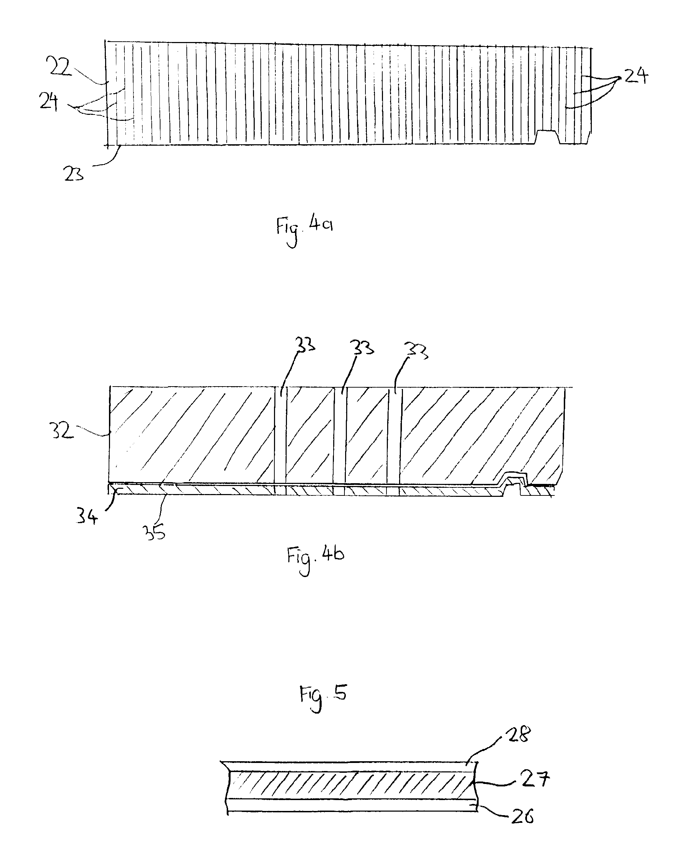

In Figuren 4a und 4b sind alternative Ausführungsbeispiele von Saugplatten gezeigt.

Die Saugplatte 22 gemäss Figur 4a ist mit einer Vielzahl von Luftkanälen 24 versehen, die sich bis an die Oberfläche 23 der Saugplatte 22 erstreckt. Durch die Wahl einer grossen Zahl von Luftkanälen 24 mit verhältnismässig geringem Querschnitt wird ebenfalls bewirkt, dass der Unterdruck über die gesamte Oberfläche der Saugplatte 22 im wesentlichen gleich bleibt, insbesondere dass keine Druckgradienten erzeugt werden.

In Figur 4b ist eine Saugplatte 32 gezeigt, die im wesentlichen bekannten Saugplatten entspricht. Insbesondere sind verhältnismässig wenig Gaskanäle 33 mit verhältnismässig grossem Querschnitt eingesetzt. Zum Vermeiden von Verformungen der Oberfläche 3 eines Dachziegels Z durch den Unterdruck ist die Saugplatte 32 mit einer Schicht 34 versehen. Die Schicht 34 besteht aus einem verformbaren Material. Die Gaskanäle 33 erstrecken sich dabei durch die Schicht 34. Weil die Schicht 34 verformbar ist, werden wegen des fehlenden, genau definierten Randes der Gaskanäle 33 im Bereich der Oberfläche 35 der Schicht 34 durch den Unterdruck keine oder geringe Verformungen der Oberfläche 3 eines Dachziegels Z bewirkt. Selbstverständlich ist es auch denkbar, die Schicht 34 durchgehend, d.h.,ohne Gasdurchführkanäle zu versehen, falls die Schicht 34 aus einem luftdurchlässigen Material besteht. In diesem Fall entspricht dieses Ausführungsbeispiel im wesentlichen dem Ausführungsbeispiel gemäss Figur 2, wobei die Gasverbindung anstatt in einem Spalt 8 wie gemäss Figur 2 durch Kanäle 33 in der Saugplatte 32 erzeugt wird.

Im Ausführungsbeispiel gemäss Figur 4b bestehen überdies auch die übrigen, bereits erwähnten Vorteile bei verformbaren Schichten 34.

Figur 5 zeigt den Aufbau der Schicht 4 im Querschnitt. Die Schicht 4 besteht aus Tricomousse und weist eine erste Lage 26 aus einem Trägermaterial, eine mittlere Lage 27 aus einem Schaumstoff und eine dritte Lage 28 auf, die eine Deckschicht bildet.

Gemeinsam bei allen Ausführungsbeispielen ist, dass die Saugplatte 2, 22, 32 so ausgebildet ist, dass im Bereich der Oberfläche 3 des Dachziegels Z ein Unterdruck erzeugt wird, der über die gesamte Oberfläche 3 des Dachziegels Z so gleichmässig ist, dass bei gegebener Verformbarkeit des Dachziegels und bei gleichem Unterdruck keine Verformungen der Oberfläche 3 erzeugt werden.

## Patentansprüche

1. Saugkopf (1) zum Halten und/oder Bewegen eines Gegenstandes (Z), insbesondere zum Entfernen eines Formkörpers wie einem Dachziegel aus einer Form (F),
mit einer Saugplatte (2), die mit einer Oberfläche (3) des Gegenstandes (Z) in Berührung bringbar ist und mit welcher zwischen der Saugplatte (2) und der Oberfläche (3) des Gegenstandes (Z) ein Unterdruck zum Halten des Gegenstandes (Z) erzeugbar ist,
dadurch gekennzeichnet, dass die Saugplatte (2) auf einer dem Gegenstand (Z) zuwendbaren Seite mit einer luftdurchlässigen Schicht (4) versehen ist.

2. Saugkopf nach Anspruch 1, dadurch gekennzeichnet, dass die Schicht (4) aus einem elastisch verformbaren Material besteht.

3. Saugkopf nach einem der Ansprüche 1 oder 2, dadurch gekennzeichnet, dass die Schicht (4) aus einem elastischem Schaumstoff besteht.

4. Saugkopf nach einem der Ansprüche 1 bis 3, dadurch gekennzeichnet, dass die Saugplatte (2) einen Grundkörper (5) mit einer geschlossenen Oberfläche (6) aufweist.

5. Saugkopf nach Anspruch 4, dadurch gekennzeichnet, dass die Form des Grundkörpers (6) und/oder der Schicht (4) der Form des Gegenstandes (Z), insbesondere des Formkörpers angepasst ist.

6. Saugkopf nach Anspruch 4 oder 5, dadurch gekennzeichnet, dass der Grundkörper (5) aus einem Kunststoffmaterial, insbesondere aus einem Kunstharz besteht.

7. Saugkopf nach einem der Ansprüche 1 bis 6, dadurch gekennzeichnet, dass der Saugkopf (1) seitlich mit Messern (7) zum Abschneiden von überstehenden Rändern (R) des Formkörpers (Z) versehen ist,
wobei zwischen den Messern (7) und Seitenflächen (17, 18) des Grundkörpers (5) und der Schicht (4) ein als Gasverbindung zwischen der Schicht (4) und Mitteln (9) zum Erzeugen eines Unterdrucks wirkender Spalt (8) gebildet ist.

8. Saugkopf nach einem der Ansprüche 4 bis 7, dadurch gekennzeichnet, dass auf der der Schicht (4) abgewandten Seite (10) des Grundkörpers (5) eine Verstärkungsplatte (11) angeordnet ist.

9. Saugkopf nach einem der Ansprüche 1 bis 8, dadurch gekennzeichnet, dass der Saugkopf (1) einen Saugkopfkörper (12) aufweist, mit welchem die Saugplatte (2) verbindbar, insbesondere lösbar verbindbar ist.

10. Saugkopf nach Anspruch 9, dadurch gekennzeichnet, dass der Saugkopf (1) Mittel (13, 14, 15) zum gegenseitigen Ausrichten und Verbinden des Saugkopfkörpers (12) und der Saugplatte (2) aufweist.

11. Saugkopf nach einem der Ansprüche 9 oder 10, dadurch gekennzeichnet, dass der Saugkopf Verbindungsmittel (19) zum Verbinden des Saugkopfkörpers (12) mit der Saugplatte (2) aufweist, welche vorzugsweise von ausserhalb des Saugkopfs, insbesondere durch eine verschliessbare Öffnung (18) in den Messern (7) betätigbar sind.

12. Saugkopf nach Anspruch 1 bis 11, dadurch gekennzeichnet, dass die Schicht (4) lösbar mit dem Grundkörper (5), insbesondere aber einem Klettverschluss verbunden ist.

13. Saugkopf nach Anspruch 1 bis 12, dadurch gekennzeichnet, dass die Schicht (4) aus mehreren Lagen (26, 27, 28) insbesondere dreilagig aufgebaut ist.

14. Saugkopf nach Anspruch 13, dadurch gekennzeichnet, dass die Schicht (4) eine mittlere Lage (27) aus einem Schaumstoff aufweist, die beidseitig von einer vorzugsweise identischen Deckschicht (26, 28) abgedeckt ist.

15. Saugkopf nach Anspruch 13 oder Anspruch 14, dadurch gekennzeichnet, dass der Grundkörper (5) mit einem Klettstück eines Klettverschlusses, insbesondere einer Mikroklette versehen ist, mit welchem die Schicht (4) lösbar verbindbar ist.

16. Saugkopf zum Halten und/oder Bewegen eines Gegenstandes, insbesondere zum Entfernen eines Formkörpers aus einer Form,
mit einer Saugplatte (22), die mit einer Oberfläche (3) des Gegenstandes (Z) in Berührung bringbar ist und mit welcher zwischen einer Oberfläche (23) der Saugplatte (22) und der Oberfläche (3) des Gegenstandes (Z) ein Unterdruck zum Halten des Gegenstandes (Z) erzeugbar ist, wobei die Saugplatte (22) mit Luftkanälen (24) zum Erzeugen des Unterdrucks versehen ist, die sich bis an die Oberfläche (23) erstrecken,
dadurch gekennzeichnet, dass der Querschnitt (Q) und/oder die Anzahl der Luftkanäle (24) in Abhängigkeit der Verformbarkeit der Oberfläche (3) des Gegenstandes (Z) so gewählt wird, dass die Oberfläche des Gegenstandes durch den erzeugten Unterdruck im wesentlichen nicht verformt wird.

17. Saugkopf zum Halten und/oder Bewegen eines Gegenstandes, insbesondere zum Entfernen eines Formkörpers aus einer Form,
mit einer Saugplatte (32), die mit einer Oberfläche (3) des Gegenstandes (Z) in Berührung bringbar ist und mit welcher zwischen einer Oberfläche (35) der Saugplatte (32) und der Oberfläche (3) des Gegenstandes (Z) ein Unterdruck zum Halten des Gegenstandes (Z) erzeugbar ist, wobei die Saugplatte (32) mit Luftkanälen (34) zum Erzeugen des Unterdrucks versehen ist, die sich bis an die Oberfläche (35) erstrecken,
dadurch gekennzeichnet, dass die Saugplatte (32) eine Schicht (34) aus einem elastisch verformbaren Material aufweist.
